# FASCICULE DE BREVET EUROPEEN

(11) **EP 0 338 960 B1**
(45) Date de publication et mention de la délivrance du brevet: **11.08.1993**
(21) Numéro de dépôt: 89470005.3
(22) Date de dépôt: 23.03.1989
(51) Int. Cl.: F24C 15/20, B01D 50/00

(54) **Dispositif pour l'aspiration, le captage et le piégeage des vapeurs au-dessus des appareils de cuisson à l'eau ou à l'huile**
Vorrichtung zum Absaugen und Auffangen von Dampf über einem Ölbad- oder Wasserbadkocher
Device for exhausting and trapping fumes above an oil-bath or water-bath cooker

(30) Priorité: 19.04.1988 FR 8805324
(43) Date de publication de la demande: 25.10.1989
(73) Titulaire: FRANCE GRIGNOTAGE, F-54110 Dombasle (FR)
(72) Inventeur: Parmentier, Michel, Vaudeville F-54740 Haroue (FR); Weber, Jean-Charles, Sommerviller F-54110 Dombasle (FR)
(74) Mandataire: Poupon, Michel

(56) Documents cités:
- EP-A- 0 087 778
- DE-A- 3 018 677

## Description

La présente invention concerne un dispositif pour l'aspiration, le captage et la piégeage des vapeurs et produits condensables entrainés par lesdites vapeurs placé au-dessus des systèmes de cuisson à l'eau ou à l'huile pour produits alimentaires.

Des dispositifs de ce type, utilisés par exemple au-dessus d'appareils du genre friteuse ou grills, ont déjà été proposés et utilisés.

Ils sont tous de structure complexe, donc difficiles à nettoyer, et offrent des performances peu satisfaisantes en regard des moyens mis en oeuvre.

Ainsi le brevet DE-A-3018677 décrit un dispositif de type cyclone, mais dont les résultats ne sont pas satisfaisants, les gaz extraits sortant en partie baisse.

Le besoin se fait donc sentir de dispositifs du type ci-dessus qui soient simples, peu onéreux, performants, d'entretien aisé tout en réduisant fortement les odeurs désagréables.

Conformément à l'invention, ce résultat est obtenu avec un dispositif à parois refroidies pour l'aspiration, le captage et le piégeage des vapeurs et produits entrainés par lesdites vapeurs placé au-dessus des systèmes de cuisson à l'eau ou à l'huile pour produits alimentaires caractérisé en ce qu'il comporte une hotte de captage desdits vapeurs et produits entrainés se prolongeant par un conduit débouchant tangentiellement dans un cyclone provoquant pendant la trajectoire cyclonique une condensation sur paroi froide et en ce que le cyclone est maintenu en légère dépression par rapport à la hotte par une turbine d'extraction disposée à la sortie haute du cyclone.

L'émission de vapeur d'eau dans le local de cuisson est de ce fait totalement supprimée et le gaz rejeté est épuré de toute particule solide ou liquide (aérosol, poussière...) par l'effet de cyclone.

Le condensateur cyclonique est maintenu en légère dépression par rapport à la hotte de collecte par une turbine d'extraction située de préférence à la sortie du cyclone.

On comprendra mieux l'invention à l'aide de la description faite ci-après d'un mode de mise en oeuvre, donné à titre d'exemple non limitatif, en référence aux dessins annexés dans lesquels :

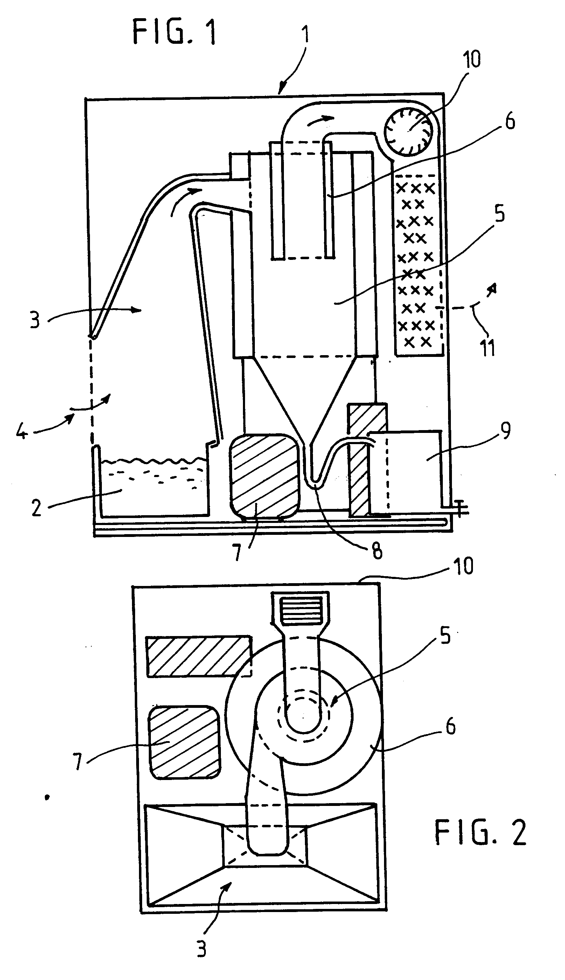

- la **figure 1** est une vue schématique en élévation latèrale d'un dispositif conforme à l'invention.
- la **figure 2** est une vue de dessus du dispositif de la figure 1.

Le dispositif, généralement référencé (1), est destiné à être placé au-dessus d'un appareil (2) produisant des émanations de vapeur d'eau plus ou moins chargées, par exemple un appareil de cuisson de frites.

On dispose au-dessus de l'appareil (2) une hotte (3) de captage des vapeurs et émanations. Les vapeurs peuvent être éventuellement diluées par une entrée d'air (4) due aux orifices d'introduction de la charge.

La hotte (3) se prolonge par un conduit qui débouche tangentiellement dans un cyclone (5) fonctionnant comme condenseur qui comporte au moins à sa partie supérieure (6) des moyens externes de refroidissement (7), la puissance frigorifique étant fournie par tout moyen connu comme par exemple fluide frigorigène en détente directe ou circulation d'eau, éventuellement refroidie, ceci non limitativement.

Le système de condensation des vapeurs réalise en même temps la séparation gaz-aérosols formés. Les condensats sont récupérés à la partie inférieure du cyclone, selon un ensemble comportant un siphon (8) et un bac de vidange (9).

A part la turbine d'extraction (10), le système ne comporte que des éléments statiques d'entretien limité à un nettoyage périodique, les parois du cyclone étant continuellement nettoyées par le ruissellement de l'eau condensée.

La sortie (11) de la turbine est avantageusement équipée d'un filtre à absorption à cartouche de charbon actif ou autre qui complète au besoin l'épuration par piégeage des incondensables.

## Revendications

1. Dispositif à parois refroidies pour l'aspiration, le captage et le piégeage des vapeurs et produits entrai nés par lesdites vapeurs placé au-dessus des systèmes de cuisson à l'eau ou à l'huile pour produits alimentaires caractérisé en qu'il comporte une hotte (3) de captage desdits vapeurs et produits entrai nés se prolongeant par un conduit débouchant tangentiellement dans un cyclone (5) provoquant pendant la trajectoire cyclonique une condensation sur paroi froide et en ce que le cyclone (5) est maintenu en légère dépression par rapport à la hotte (3) par une turbine d'extraction (10) disposèe à la sortie haute du cyclone (5).

2. Dispositif selon les revendications 1 ou 2, caractérisé en ce que la sortie (11) de la turbine est équipée d'un filtre à absorption.

3. Dispositif selon les revendications 1 ou 2, caractérisé en ce que le cyclone (5) comporte au moins à sa partie supérieure (6) des moyens externes de refroidissement (7).

4. Dispositif selon la revendication 3, caractérisé en ce que la puissance frigorifique est fournie par un fluide frigogène en détente directe.

5. Dispositif selon la revendication 4, caractérisé en ce que la puissance frigorifique est fournie par une circulation d'eau.

## Claims

1. Device, having chilled walls for the induction, collection and entrapment of vapours and products carried by said vapours, such device being situated above water or oil cooking systems for foodstuffs, characterised in that it comprises a hood (3) for collecting said vapours and products carried thereby, said hood being extended by a duct which opens out tangentially into a cyclone (5), thereby producing condensation on the cold wall during the cyclonic movement, and in that the cyclone (5) is kept slightly depressed relative to the hood (3) by an extractor fan (10) disposed at the upper outlet of the cyclone (5).

2. Device according to claims 1 or 2, characterised in that the outlet (11) of the fan is provided with an absorption filter.

3. Device according to claims 1 or 2, characterised in that the cyclone (5) comprises external cooling means (7) at least in its upper portion (6).

4. Device according to claim 3, characterised in that the refrigerating power is provided by a directly released freezing fluid.

5. Device according to claim 4, characterised in that the refrigerating power is provided by a circulation of water.

## Patentansprüche

1. Vorrichtung zum Absaugen und Auffangen von Dämpfen und von mit den genannten Dämpfen mitgeführten Stoffen, welche Kühlwände aufweist und oberhalb eines mit Wasser oder Öl arbeitenden Garsystems für Lebensmittel angeordnet ist, **dadurch gekennzeichnet**, daß sie eine Auffanghaube (3) für die genannten Dämpfe und mitgeführten Produkten aufweist, welche in einen Kanal übergeht, der tangential in einen Zyklon (5) mündet, welcher auf der Zyklonbahn eine Kondensation auf einer kalten Wand herbeiführt und daß der Zyklon (5) in Bezug auf die Auffanghaube (3) mittels eines Absauggebläses (10) am oberen Ausgang des Zyklons (3) unter leichtem Unterdruck gehalten ist.

2. Vorrichtung nach den Ansprüchen 1 oder 2, **dadurch gekennzeichnet**, daß der Ausgang (11) des Gebläses mit einem Absorptionsfilter versehen ist.

3. Vorrichtung nach den Ansprüchen 1 oder 2, **dadurch gekennzeichnet**, daß der Zyklon (5) zumindest in seinem oberen Bereich (6) externe Kühleinrichtungen (7) aufweist.

4. Vorrichtung nach Anspruch 3, **dadurch gekennzeichnet**, daß die Kühlleistung mittels einer sich direkt entspannenden Kühlflüssigkeit erzeugt ist.

5. Vorrichtung nach Anspruch 4, **dadurch gekennzeichnet,** daß die Kühlleistung durch einen Wasserumlauf erzeugt ist.
